# EUROPÄISCHE PATENTSCHRIFT

(11) **EP 4 067 009 B1**
(45) Veröffentlichungstag und Bekanntmachung des Hinweises auf die Patenterteilung: **06.09.2023**
(21) Anmeldenummer: 21166466.9
(22) Anmeldetag: 31.03.2021
(51) Int. Cl.: B25J 9/00

(54) **VORRICHTUNG ZUM UNTERSTÜTZEN WENIGSTENS EINES OBERARMS**
DEVICE FOR SUPPORTING AT LEAST ONE UPPER ARM
DISPOSITIF D'AIDE À AU MOINS UN BRAS SUPÉRIEUR

(43) Veröffentlichungstag der Anmeldung: 05.10.2022
(73) Patentinhaber: Ottobock SE & Co. KGaA, 37115 Duderstadt (DE)
(72) Erfinder: SCHIRRMEISTER, Benjamin, 37083 Göttingen (DE); MLADEK, Markus, 37130 Gleichen OT Bremke (DE); VOGEL, Carsten, 37115 Duderstadt (DE); KROLL-ORYWAHL, Olaf, 37154 Northeim (DE); FINKE, Lars Benjamin, 37136 Landolfshausen (DE); TÜTTEMANN, Markus, 45731 Waltrop (DE); BORNMANN, Jonas, 37115 Duderstadt (DE); MERKER, Maximilian Anton, 37073 Göttingen (DE); BREMER, Michael, 37083 Göttingen (DE); RÖSCHEL, Fabienne, 37073 Göttingen (DE); MIZERA, Oliver, 37083 Göttingen (DE); SCHWEDHELM, Pascal, 37115 Duderstadt (DE); LANZINGER, Michael, 84181 Neufraunhofen (DE); KÄSMANN, Simon, 81241 München (DE)
(74) Vertreter: Gramm, Lins & Partner Patent- und Rechtsanwälte PartGmbB

(56) Entgegenhaltungen:
- DE-A1-102018 119 754
- US-A1- 2014 158 839
- US-A1- 2016 339 583

## Beschreibung

Die Erfindung betrifft eine Vorrichtung zum Unterstützen wenigstens eines Oberarms eines Benutzers, wobei die Vorrichtung wenigstens ein Armstützelement mit einer Armschale zum Anlegen an den Oberarm, wenigstens einen passiven Aktuator, der ein erstes Ende und ein zweites Ende aufweist und eingerichtet ist, eine Kraft auf das wenigstens eine Armstützelement aufzubringen, wenigstens ein Umlenkelement, an dem der wenigstens eine Aktuator anliegt, wenigstens ein Gegenlager für die aufzubringende Kraft aufweist.

Eine solche Vorrichtung ist zum Beispiel aus der US 2016/339583 A1 bekannt.

Herkömmlicherweise verfügt das Gegenlager über ein Kraftübertragungselement und ein Gegenlagerelement. Das Kraftübertragungselement dient dazu, eine Gegenkraft für die durch den Aktuator aufzubringende Kraft in das Gegenlagerelement abzuleiten, das beispielsweise ausgebildet ist, die Kraft in den Körper des Trägers, beispielsweise in die Hüfte abzuleiten. Auch Gegenlagerelemente, die eingerichtet sind, die Kraft beispielsweise in den Boden, auf dem der Träger der Vorrichtung steht oder geht, abzuleiten, sind aus dem Stand der Technik bekannt.

Eine derartige Vorrichtung ist beispielsweise aus der US 2016/0081871 A1 bekannt. Sie verfügt über ein Gegenlagerelement, das in Form eines um den Rumpf des Benutzers herumlegbaren Gurtes ausgebildet ist. An ihm befinden sich zwei entlang des Rückens zur Schulter verlaufende Stützstreben, die oberhalb und seitlich neben den Schultern des Benutzers mit jeweils einem Gelenk verbunden sind, so dass der Arm angehoben werden kann. An den entsprechenden Gelenken sind Federelemente angeordnet, durch die eine nach oben gerichtete Kraft auf die Armschalen ausgeübt werden kann, so dass beispielsweise beim Heben schwerer Gegenstände oder beim Arbeiten über Kopf eine Unterstützung der Arme erfolgen kann. Sollen die Arme gesenkt werden, muss durch die Arme ein Druck auf die Armschalen ausgeübt werden, der die von den Federelementen aufgebrachte Kraft übersteigt, so dass die Arme absinken.

Aus der US 2014/158839 A1 und der US 9,427,865 B2 ist eine entsprechende Vorrichtung bekannt, bei der als mechanischer Energiespeicher, der als passiver Aktuator wirkt, jeweils eine Feder, insbesondere eine Zugfeder vorgesehen ist, die mit einem Bowdenzug verbunden ist. Der Bowdenzug wird über eine Umlenkrolle geführt, so dass beim Verschwenken eines Armes, was eine Bewegung des Armstützelementes relativ zum Gegenlagerelement bedeutet, die Feder gedehnt wird, so dass der mechanische Energiespeicher mit Energie aufgeladen wird.

Insbesondere für den Fall, dass der Benutzer der Vorrichtung beispielsweise stolpert oder stürzt und sich beispielsweise abrollen muss, können derartige Vorrichtungen zu einer Gefahr für den Benutzer werden und zu Verletzungen führen. Dies geschieht, obwohl die außerhalb des Schultergelenks angeordneten Gelenke der Vorrichtung beispielsweise gemäß dem Stand der Technik möglichst exakt so angeordnet sind, dass ihre Gelenkachsen und Schwenkachsen durch die entsprechenden Achsen des Schultergelenks hindurchlaufen, so dass vermeintlich alle Bewegungen, die die natürliche Schulter und damit der Arm des Benutzers ausführen kann, nachgebildet werden können.

Eine aktive Vorrichtung, die Arme beim Arbeiten über Kopf unterstützt, ist aus der EP 3 156 193 A1 bekannt. Die Armschalen sind über eine Vielzahl verschiedener Gelenke und Verbindungsrahmenelemente miteinander verbunden. Dadurch sollen möglichst viele der Bewegungen, die ein Schultergelenk durchführen kann, auch mit der angelegten Vorrichtung möglich sein. Die Vorrichtung ist jedoch aufgrund der Vielzahl an Elementen groß, konstruktionsaufwendig und damit teuer. Hinzu kommt, dass die Vorrichtung das Schultergelenk durch zwei Scharniergelenke nachzubilden versucht. Dadurch sind nicht aller Bewegungen, die ein natürliches Schultergelenk ausführen kann, möglich. Insbesondere für das Anheben des Armes in einer bestimmten Richtung muss zunächst das dafür vorgesehene Gelenk in die richtige Position gedreht werden, damit seine Schwenkachse in die gewünschte Richtung zeigt. Dadurch müssen gegebenenfalls zusätzliche und unnatürliche Bewegungen ausgeführt werden, wodurch der Komfort und damit auch die Akzeptanz der Vorrichtung beim Benutzer reduziert wird.

Weitere Unterstützungsvorrichtungen, die insbesondere beim Heben von schweren Gegenständen oder beim Arbeiten über Kopf unterstützen, sind aus der WO 2014/195373 A1 und der US 2016/339583 A1 bekannt. Diese Vorrichtungen sind jedoch nur auf besondere Bewegungen, die es zu unterstützen gilt, ausgerichtet. In Abhängigkeit von der Tätigkeit, die der Träger der Vorrichtung ausführt, kann es von Vorteil sein, unterschiedlich starke Kräfte durch den passiven Aktuator aufbringbar zu machen. Auch für den Fall, dass ein und dieselbe Vorrichtung für unterschiedliche Benutzer verwendet werden soll, ist die Einstellbarkeit der Kräfte von Vorteil. Aus dem Stand der Technik sind eine Reihe von Möglichkeiten bekannt, die Kraft einzustellen. So ist es beispielsweise möglich, den Aktuator gegen einen anderen Aktuator auszutauschen, der eingerichtet ist, eine größere oder kleinere Kraft aufzubringen. Zudem ist es aus der DE 10 2018 119754 A1 bekannt, einen Kraftangriffspunkt, an dem ein Ende des Aktuators beispielsweise mit dem Armstützelement verbunden ist, zu versetzen. Das Armstützelement ist vorzugsweise um eine Rotationsachse drehbar beispielsweise am Kraftübertragungselement angeordnet, sodass durch eine Verlagerung des Kraftangriffspunktes eine wirksame Hebellänge veränderbar ist. Dadurch wird naturgemäß das erzeugte Drehmoment verändert.

Nachteilig ist jedoch, dass dazu in der Regel wenigstens ein Ende des Aktuators gelöst werden muss. Insbesondere bei Aktuatoren, die elastische Elemente enthalten, besteht dann die Gefahr, dass das Ende gelöst wird, ohne dass der Aktuator vollständig entspannt ist. Wird dann das gelöste Ende versehentlich oder vorzeitig losgelassen, kommt es zu einem schlagartigen Entladen der Energie des Aktuators und das nun freie Ende des Aktuators kann unkontrolliert umherschlagen und zu Personen- und Sachschaden führen. Der Erfindung liegt daher die Aufgabe zugrunde, eine gattungsgemäße Vorrichtung so weiterzuentwickeln, dass die auf bringende Kraft einstellbar ist, ohne dass die Gefahr besteht, dass ein freies Ende des Aktuators zu Schaden führen kann.

Die Erfindung löst die gestellte Aufgabe durch eine Vorrichtung gemäß Anspruch 1.

Der wenigstens eine passive Aktuator ist kein Motor. Die benötigte Energie, die er zum Aufbringen der Kraft benötigt, wird durch den Benutzer oder Träger der Vorrichtung aufgebracht. In der Regel wird die Kraft, die auf das Armstützelement aufgebracht werden soll, der Schwerkraft entgegenwirkend aufgebracht. Beim Anheben des Oberarmes und des mit ihm verbundenen Armstützelementes wird folglich Energie aus dem Energiespeicher des passiven Aktuators entzogen. Die entgegengesetzte Bewegung, also das Absenken des Armes, geschieht gegen die aufgebrachte Kraft, sodass Energie dem Energiespeicher des passiven Aktuators zugeführt wird. Für einen passiven Aktuator im Sinne der vorliegenden Erfindung ist dies die einzige Energiequelle, wenn man von einer einstellbaren Vorspannung des Energiespeichers des passiven Aktuators absieht, die möglich, aber nicht notwendig ist.

Vorteilhafterweise verfügt der passive Aktuator über wenigstens einen Energiespeicher, bevorzugt wenigstens einen mechanischen Energiespeicher. Dieser kann beispielsweise ein Federelement, ein Druckspeicher, ein pneumatisches und/oder hydraulisches System und/oder einen hydraulischen Energiespeicher aufweisen. Das Federelement kann beispielsweise direkt am Gelenk zwischen dem Druckkraftübertragungselement und dem Armstützelement in Form einer Rotationsfeder oder einer Konstantkraftfeder angeordnet sein. Auch elastische Elemente in Form von elastischen Seilen, beispielsweise Gummiseilen, sind vorstellbar, deren eines Ende an einem Teil des Armstützelementes angeordnet sind. Wird das Armstützelement relativ zum Druckkraftübertragungselement um die Schwenkachse herum verschwenkt, wird das elastische Element gedehnt oder gestaucht, so dass Energie dem mechanischen Energiespeicher zugeführt oder aus ihm abgezogen wird. Selbstverständlich sind auch andere Elemente, beispielsweise Gasdruckfedern oder Druckfedern, denkbar, für die eine Umlenkung verwendet wird, um aus der durch die Druckfeder bereitgestellten Druckkraft eine Zugkraft zu machen.

An einem oder beiden Enden des passiven Aktuators kann ein Übertragungselement angeordnet sein, welches die vom Aktuator erzeugte Kraft auf das jeweilige Bauteil überträgt. Dies kann beispielsweise ein Bowdenzug oder ein Zugkraftübertragungselement beispielsweise in Form eines Drahtes oder Seiles oder ein Druckkraftübertragungselement beispielsweise in Form einer Stange sein. Die Kombination aus dem eigentlichen Aktuator, der beispielsweise in Form des elastischen Elementes vorliegt, und den an einem oder zwei seiner Enden angeordneten Übertragungselementen, wird im Sinne der vorliegenden Erfindung als "passive Aktuator" verstanden. Es ist folglich für die Erfindung ausreichend, wenn der Aktuator selbst oder der Bowdenzug oder das Übertragungselement, das mit einem Ende des Aktuators verbunden ist und dessen Kraft auf ein Bauteil der Vorrichtung überträgt, an dem wenigstens einen Umlenkelement anliegt. Das Übertragungselement selbst kann unabhängig von der Ausgestaltung des passiven Aktuators elastisch oder inelastisch ausgebildet sein. Das Kraftübertragungselement, welches Teil des Gegenlagers ist, ist jedoch nie Teil des passiven Aktuators.

Durch die erfindungsgemäße Ausgestaltung lässt sich die vom passiven Aktuator aufgebrachte Kraft verändern, ohne dass die Position des Arms sich verändert. Dazu wird eine der Eigenschaften des Umlenkelementes verändert. So ist es beispielsweise möglich, die Gestalt, insbesondere die äußere Kontur, des Umlenkelementes zu verändern, an der der wenigstens eine passive Aktuator anliegt. Dazu kann es ausreichend sein, das Umlenkelement um eine Rotationsachse zu drehen, sodass der passive Aktuator an einem anderen Teil der Kontur des Umlenkelementes anliegt. Dadurch kann einerseits eine Spannung des passiven Aktuators verändert werden. Ist der veränderte Teil der Kontur beispielsweise länger als der ursprüngliche Teil, wird der passive Aktuator mehr gespannt, sodass eine größere Kraft ausgeübt wird. Andererseits kann auch die Richtung der vom Aktuator aufgebrachten Kraft verändert werden. Durch Veränderung der Kontur des Umlenkelementes ist es möglich, die Richtung in der sich der passive Aktuator vom Umlenkelement in Richtung auf eines der Enden des Aktuators erstreckt, zu verändern.

Zusätzlich oder alternativ dazu ist die Position des Umlenkelementes veränderbar. Auch dadurch lässt sich die vom passiven Aktuator zu überbrückende Entfernung von seinem ersten Ende zu seinem zweiten Ende vergrößern oder verkleinern, sodass auch die vom Aktuator aufgebrachte Kraft vergrößert oder verkleinert wird. Auch die Richtung einer oder beider Teilstrecken des passiven Aktuators vom Umlenkelement zum ersten und/oder zum zweiten Ende kann auf diese Weise modifiziert und angepasst werden, wodurch ebenfalls die vom Aktuator auf das Armstützelement aufgebrachte Kraft verändert werden kann. Durch eine Veränderung der Position des Umlenkelementes ist es auch möglich, die wirksame Hebellänge der angreifenden Kraft zu verändern.

Alternativ oder zusätzlich dazu lässt sich auch die Art des Umlenkelementes verändern. So ist es beispielsweise möglich, mehrere Umlenkelementes mit gleicher oder unterschiedlicher Kontur zu verwenden, wobei der Aktuator nicht über alle der vorhandenen Umlenkelemente geführt wird. Wird der Aktuator über andere Umlenkelemente geführt, kann dadurch die Kraft und/oder die Richtung verändert werden. Vorzugsweise lässt sich zusätzlich die Vorspannung des Aktuators verändern oder so einstellen, dass die Änderung der Vorspannung, die durch die Veränderung einer Eigenschaft des wenigstens einen Umlenkelementes hervorgerufen werden können, ausgeglichen werden, so dass die Vorspannung insgesamt nahezu oder vollständig gleich bleibt.

Vorteilhafterweise sind eine erste Position, an der das erste Ende des Aktuators an einem Bauteil der Vorrichtung angeordnet ist, und eine zweite Position, an der das zweite Ende des Aktuators an dem Bauteil der Vorrichtung angeordnet ist, unveränderbar. Zur Einstellung der Kraft, die von dem Aktuator auf das Armstützelement aufgebracht werden kann, ist es daher nicht nur unnötig, sondern unmöglich, den Aktuator zu lösen. Die durch ein unkontrolliert umherschlagen des Ende des Aktuators ausgehende Gefahr ist in dieser Ausgestaltung sicher gebannt.

In einer bevorzugten Ausgestaltung ist das wenigstens eine Umlenkelement entlang einer vorbestimmten Bahn, vorzugsweise einer geraden Linie, besonders bevorzugt entlang eines Bauteils der Vorrichtung, bewegbar. Das Umlenkelement kann beispielsweise ein Stift, Pin oder ein anderes Bauteil sein, das beispielsweise entlang einer Kulisse verschiebbar ist. Die Kulisse kann geradlinig, gebogen oder in einer freien Form ausgebildet sein. Ein ovaler, kreisbogenförmig oder polygonal ausgebildeter Verlauf der Kulisse ist möglich.

Vorzugsweise ist wenigstens ein Umlenkelement an dem Stift oder Pin angeordnet. Vorzugsweise ist dieses wenigstens eine Umlenkelement lösbar angeordnet, sodass es bei Bedarf gegen andere Umlenkelemente ausgetauscht werden kann. Besonders bevorzugt ist das wenigstens eine Umlenkelement um den Pin oder den Stift drehbar angeordnet, wobei es besonders bevorzugt in unterschiedlichen Orientierungen relativ zu dem Pin befestigbar ist. In einem befestigten Zustand ist die Orientierung relativ zum Pin daher nicht veränderbar, sodass die einmal eingestellte Kraft, die vorzugsweise von der Orientierung des Umlenkelementes relativ zum Pin abhängt, sich nicht versehentlich und unbeabsichtigt verändert. Dazu kann eine Arretierung oder Verriegelung vorhanden sein, die in einen verriegelten Zustand bringbar ist, in dem die Orientierung des Umlenkelementes relativ zum Pin nicht veränderbar ist. Sie kann auch in einen gelösten Zustand gebracht werden, in welchem die Orientierung verändert werden kann.

Vorzugsweise verfügt das Gegenlager über ein Gegenlagerelement und ein Kraftübertragungselement, welches eingerichtet ist, eine Gegenkraft auf das Gegenlagerelement zu übertragen, wobei das Armstützelement um eine Schwenkachse schwenkbar an dem Kraftübertragungselement angeordnet ist.

Vorzugsweise sind das erste und das zweite Ende des Aktuators an dem Kraftübertragungselement und wenigstens ein Umlenkelement an dem Armstützelement angeordnet. Alternativ dazu sind die beiden Enden des Aktuators an dem Armstützelement und wenigstens ein Umlenkelement an dem Kraftübertragungselement positioniert. Besonders bevorzugt ist ein Ende des Aktuators an der Schwenkachse befestigt, um die das Armstützelement relativ zum Kraftübertragungselement schwenkbar ist. In bevorzugten Ausgestaltungen ist eines der Enden des Aktuators oder dessen Übertragungselementes am Umlenkelement selbst angeordnet. Dabei ist vorzugsweise der Akuator und/oder eines seiner Übertragungselemente zumindest abschnittsweise entlang des Umlenkelementes geführt.

Mithilfe der beiliegenden Figuren werden nachfolgend einige Ausführungsbeispiele der vorliegenden Erfindung näher erläutert. Es zeigen
- Figuren 1 bis 3: - schematische Darstellungen einer Vorrichtung gemäß einem Ausführungsbeispiel der vorliegenden Erfindung in unterschiedlichen Stellungen,
- Figuren 4 und 5: - eine Vorrichtung gemäß einem Ausführungsbeispiel der vorliegenden Erfindung im angelegten Zustand,
- Figur 6 bis 16: - schematische Darstellungen eines Ausschnittes einer Vorrichtung gemäß unterschiedlicher Ausführungsbeispiele der vorliegenden Erfindung
- Figur 17: - einen schematischen Ausschnitt aus einer Vorrichtung gemäß einem Ausführungsbeispiel der vorliegenden Erfindung und
- Figur 18 bis 22: - weitere schematische Darstellungen eines Ausschnittes einer Vorrichtung gemäß unterschiedlicher Ausführungsbeispiele der vorliegenden Erfindung.

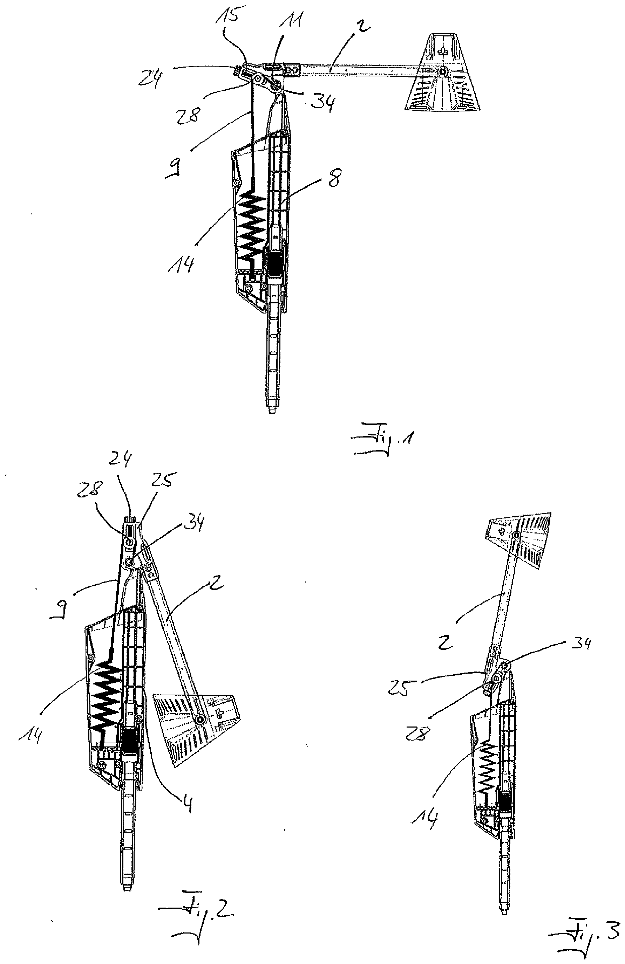

Figur 1 zeigt schematisch ein Armstützelement 2 und ein Kraftübertragungselement, die um eine Schwenkachse 34 eines Gelenkes relativ zueinander schwenkbar angeordnet sind. Ein passiver Aktuator 14, der ein zu ihm gehörendes Übertragungselement 9 aufweist, ist eingerichtet, eine Kraft aufzubringen. Das erste Ende 11 des passiven Aktuators 14 ist an der Schwenkachse 34 befestigt. Der passive Aktuator 14 liegt an einem Umlenkelement 28 an, das im gezeigten Ausführungsbeispiel als kreisförmige Umlenkscheibe ausgebildet ist. Mittels einer Gewindestange 15, die über eine Betätigungseinrichtung 24 beispielsweise in Form einer Rändelschraube drehbar ist, ist das Umlenkelement 28 verschiebbar und in unterschiedlichen Positionen befestigbar. Dadurch wird einerseits der vom passiven Aktuator 14 zu überbrückende Abstand zwischen dem ersten Ende 11 und seinem zweiten Ende, welches nicht dargestellt ist, vergrößert oder verkleinert. Dies führt dazu, dass die in der gezeigten Position des Armstützelementes 2 relativ zum Kraftübertragungselement 8 erzeugte Kraft variiert. Zudem verändert sich auch die Richtung, in der sich der in Figur 1 untere Teil des passiven Aktuator, der von dem Umlenkelement 28 nach unten verläuft, erstreckt. Auch dadurch wird die auf das Armstützelement 2 aufgebrachte Kraft variiert.

Figur 2 zeigt die Vorrichtung aus Figur 1 mit einem abgesenkten Armstützelement 2. Das Umlenkelement 28 ist an einem Kraftangriffshebel 25 angeordnet, der drehfest mit dem Armstützelement 2 verbunden ist. Da das Armstützelement 2 um die Schwenkachse 34 relativ zum Kraftübertragungselement 8 verschwenkt wurde, hat sich auch der Kraftangriffshebel 25 und damit das an ihm befestigte Umlenkelement 28 verschoben. Der passive Aktuator 14 wurde energetisch aufgeladen, im vorliegenden Beispiel gedehnt. Die von ihm ausgeübte Kraft ist damit im Vergleich zur Situation in Figur 1 vergrößert worden. Gleichzeitig verläuft das Übertragungselement 9, durch das die Kraft übertragen wird, nunmehr an der Schwenkachse 34, sodass der Hebelarm, mit dem die Kraft auf den Kraftangriffshebel 25 übertragen wird, reduziert wird. Während also der Aktuator 14 selbst eine größere Kraft ausübt, führt diese zu einem geringeren Drehmoment, das auf das Armstützelement 2 um die Schwenkachse 34 herum ausgeübt wird. Die einen Arm unterstützende Kraft ist folglich reduziert. In Figur 2 ist eine Endposition der Vorrichtung dargestellt. Im Bereich der Schwenkachse 34 liegt das Armstützelement 2 an dem Kraftübertragungselement 8 an. Im gezeigten Ausführungsbeispiel verläuft in dieser Position der Aktuator und insbesondere sein Übertragungselement 9 nicht durch die Schwenkachse 34, sondern nahe daran vorbei.

Figur 3 zeigt die Vorrichtung aus den Figuren 1 und 2 in einer dritten Position. Hier ist das Armstützelement 2 um die Schwenkachse 34 angehoben worden. Dadurch bewegt sich auch der Kraftangriffshebel 25 und das an ihm befestigte Umlenkelement 28. Im gezeigten Ausführungsbeispiel führt dies zu einer Entspannung des Aktuators 14, sodass die von ihm aufgebrachte Kraft reduziert wird.

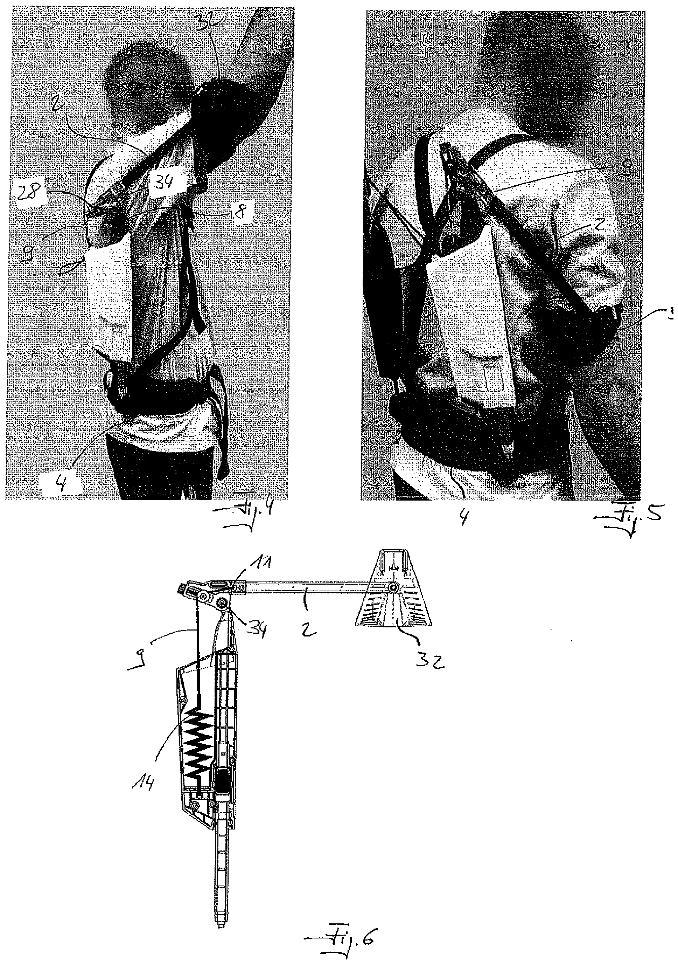

Die Figuren 4 und 5 zeigen eine Vorrichtung gemäß den Figuren 1 bis 3 im angelegten Zustand. Ein Arm des Benutzers ist in einer Armschale 32 angeordnet, die am Armstützelement 2 positioniert ist. Das Kraftübertragungselement 8 befindet sich in einer Hülse und es daher nur abschnittsweise dargestellt. Man erkennt jedoch das Übertragungselement 9, das Teil des passiven Aktuators ist und das über das Umlenkelement 28 geführt ist. Es ist im Bereich der Schwenkachse 34 befestigt, wie dies in den Figuren 1 bis 3 deutlicher zu erkennen ist. In den Figuren 4 und 5 ist zusätzlich ein Gegenlagerelement 4 dargestellt, das als hüpft Gurt ausgebildet ist

Figur 6 zeigt eine Vorrichtung gemäß den Figuren 1 bis 3, die sich in einem Detail von diesen unterscheidet. Das erste Ende 11 des passiven Aktuators 14, dass im gezeigten Ausführungsbeispiel Teil des Übertragungselementes neuen ist, ist nicht an der Schwenkachse 34, sondern am Armstützelement 2 befestigt. Die Funktionsweise wird dadurch nicht beeinflusst.

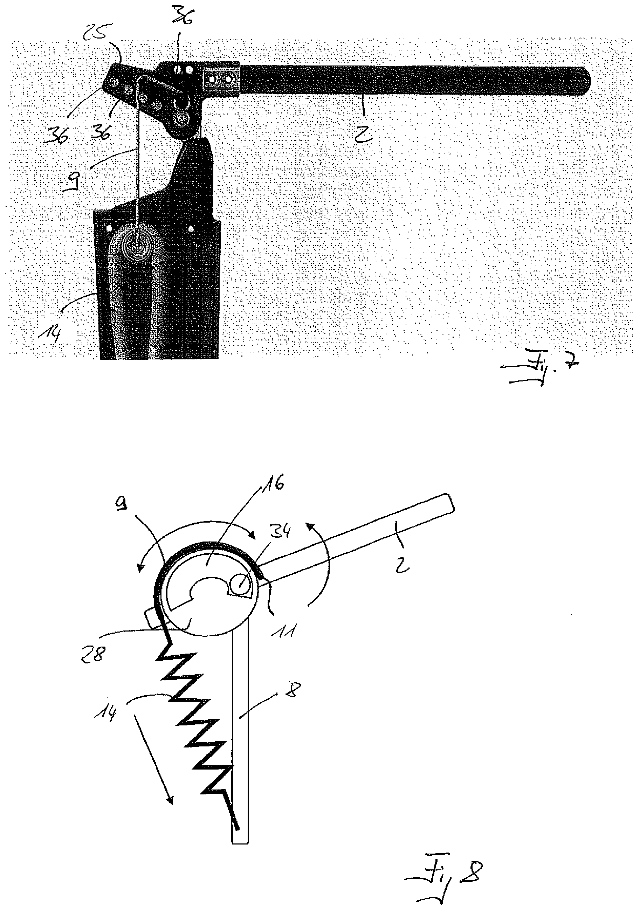

Figur 7 zeigt einen vergrößerten Ausschnitt aus einer Vorrichtung gemäß einem Ausführungsbeispiel der vorliegenden Erfindung. Der passive Aktuator 14 verfügt über ein elastisches Band, an dem ein Übertragungselement 9, welches ebenfalls Teil des Aktuators 14 ist, angeordnet ist. Der Kraftangriffshebel 25 verfügt über mehrere Stifte 36, die jeweils ein Umlenkelement 28 bilden. Das Übertragungselement 9 wird über wenigstens einen dieser Stifte 36 geführt und ist am Armstützelement 2 befestigt.

Figur 8 zeigt eine ähnliche Ausgestaltung. Das Umlenkelement 28 ist nun jedoch nicht als kreisförmige Scheibe ausgebildet, sondern verfügt über eine freie Form. Der passive Aktuator 14 liegt jedoch auch hier am äußeren Umfang des Umlenkelementes 28 an. Das Umlenkelement 28 verfügt über eine Kulisse 16, durch die ein an der Schwenkachse 34 befestigte Pin, der nicht dargestellt ist, hindurchgeführt ist. Das Umlenkelement 28 ist folglich relativ zur Schwenkachse 34 verschiebbar, indem der Pin entlang der Kulisse 16 verschoben wird. Zudem ist das Umlenkelement 28 um den Pin und damit um die Schwenkachse 34 herumdrehbar. Auf diese Weise lassen sich der Abstand zwischen dem ersten Ende 11, das im gezeigten Ausführungsbeispiel durch das Übertragungselement 9 gebildet wird, und dem nicht gezeigten zweiten Ende des passiven Aktuators 14 sowie die Richtung des zweiten Teils des Aktuators 14 verändern. Durch eine gestrichelte Linie ist eine alternative Ausführungsform dargestellt, in der das erste Ende 11 des Aktuator 14 an dem Kraftübertragungselement 8 angeordnet ist.

Im rechten Bereich der Figur 8 ist beispielhaft ein Umlenkelement 28 dargestellt, dessen Kulisse 16 als frei geformte Ausnehmung ausgebildet ist. Durch diese Darstellung soll illustriert werden, dass die Form der Kulisse 16 weder eine feste Breite haben muss noch einer gegebenenfalls gebogenen Linie folgen muss. Beide Merkmale sind zwar vorteilhaft, jedoch nicht notwendig.

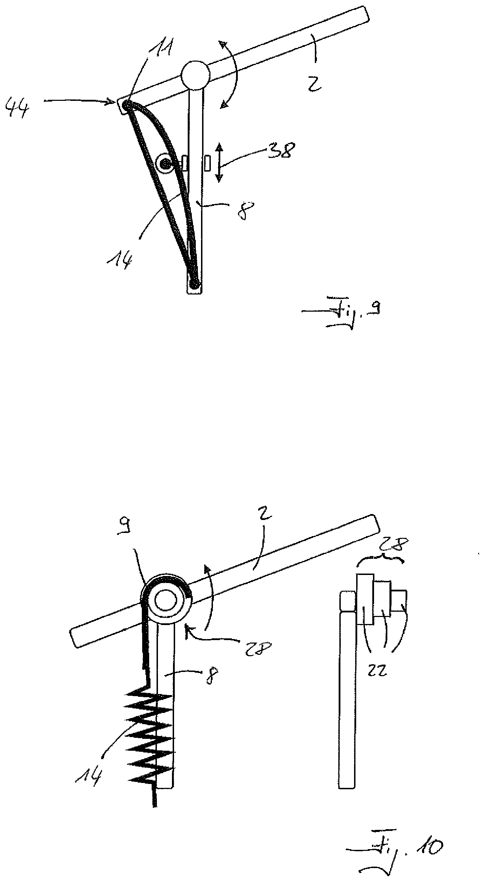

Figur 9 zeigt eine weitere Ausgestaltung gemäß der vorliegenden Erfindung. Der passive Aktuator 14 ist mit seinem ersten Ende 11 an einem Krafteinleitungspunkt 44 angeordnet und verläuft über ein Umlenkelement 28, welches an einem Schieber 20 positioniert ist. Dieser Schieber ist im gezeigten Ausführungsbeispiel entlang des Doppelpfeiles 38, also entlang des Kraftübertragungselementes 8 verschiebbar. Dadurch verändert sich insbesondere die Richtung des Teils des passiven Aktuators 14, der sich zwischen dem Krafteinleitungspunkt 44, also dem ersten Ende 11 des Aktuators 14 und dem Umlenkelement 28 erstreckt.

Figur 10 zeigt eine weitere Ausgestaltung der vorliegenden Erfindung. Das nur schematisch dargestellte Armstützelement 2 ist wieder schwenkbar am Kraftübertragungselement 8 angeordnet. Das Umlenkelement 28 ist in Figur 4 als Serie von Scheiben dargestellt. Der rechte Teil der Figur 4 zeigt eine Seitenansicht, in der man die einzelnen Scheiben 22 gut erkennt. Im gezeigten Ausführungsbeispiel sind sie konzentrisch und kreisförmig angeordnet. Dies ist von Vorteil, aber nicht notwendig. Der passive Aktuator 14 verläuft entlang der äußeren Kontur einer der Scheiben 22. Soll die Kraft eingestellt und verändert werden, wird der Aktuator über den äußeren Rand, also die Kontur, einer anderen Scheibe 22 geführt.

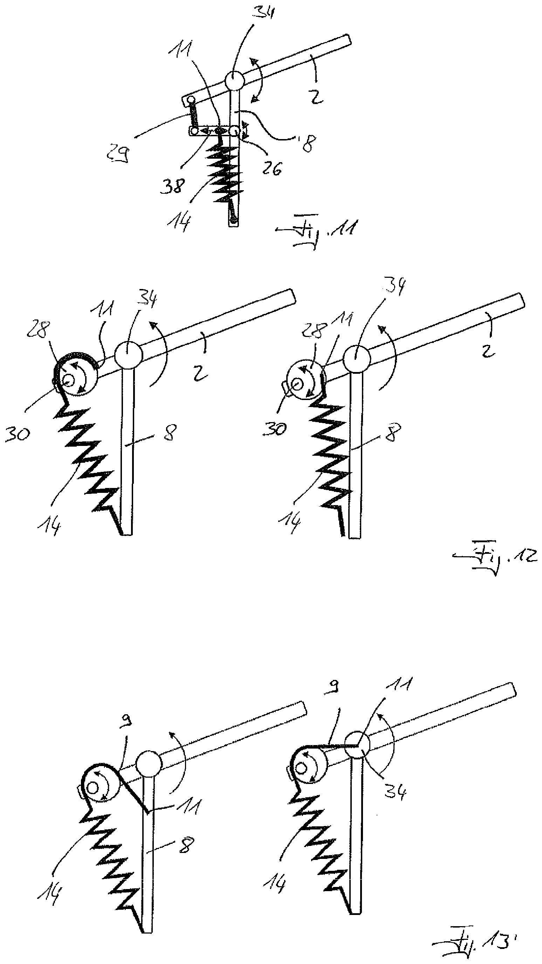

Figur 11 zeigt eine weitere Ausgestaltung der Vorrichtung. Auch hier ist das Armstützelement 2 um eine Schwenkachse 34 am Kraftübertragungselement 8 angeordnet. Am Kraftübertragungselement 8 befindet sich ein Kraftangriffshebel 25, an dem das erste Ende 11 des passiven Aktuators 14 angeordnet ist. Der Kraftangriffshebel 25 ist um eine Achse 26 schwenkbar am Kraftübertragungselement 8 angeordnet. Die Stelle, an der das erste Ende 11 des passiven Aktuators 14 am Kraftangriffshebel 25 angeordnet ist, ist entlang des Doppelpfeils 38 verschiebbar. Dadurch verändert sich einerseits die Vorspannung des Aktuators 14 als auch die Richtung, in der er seine Kraft aufbringt. Über eine Zugverbindung 29, die in diesem Fall das Übertragungselement 9 bildet wird die vom Aktuator 14 auf den Kraftangriffshebel 25 ausgeübte Kraft auf das Armstützelement 2 übertragen.

Figur 12 zeigt eine andere Ausgestaltung einer Vorrichtung gemäß einem Ausführungsbeispiel der vorliegenden Erfindung in 2 unterschiedlichen Anordnungen. Beide Darstellungen zeigen das Armstützelement 2, das um die Schwenkachse 34 drehbar am Kraftübertragungselement 8 angeordnet ist. Das Umlenkelement 28 ist als kreisförmige Scheibe ausgebildet und um eine Drehachse 30 drehbar am Armstützelement 2 angeordnet. Das erste Ende 11 des Aktuators 14 ist an dem Umlenkelement 28 befestigt. Die beiden Darstellungen in Figur 12 unterscheiden sich durch eine Umdrehung des Umlenkelementes 28 um die Drehachse 30. Während in der rechten Darstellung von Figur 12 das erste Ende 11 des Aktuators 14 so positioniert ist, dass der Aktuator von diesem Punkt ausgehend im Uhrzeigersinn am Umlenkelement 28 anliegt, ist dies in der linken Darstellung der Figur 6 anders. Dort verläuft ein Teil des Aktuators gegen den Uhrzeigersinn am Umlenkelement 28.

Figur 13 zeigt eine andere Ausgestaltung. Beide Darstellungen aus Figur 13 sind den Darstellungen aus den Figuren 12 sehr ähnlich und unterscheiden sich im Wesentlichen dadurch, wo das erste Ende 11 des passiven Aktuators 14, dass in diesem Fall durch ein Ende des Übertragungselementes 9 gebildet wird, befestigt ist. In der linken Darstellung der Figur 13 befindet sich das erste Ende 11 am

Kraftübertragungselement 8. In der rechten Darstellung der Figur 13 ist es an der Schwenkachse 34 befestigt.

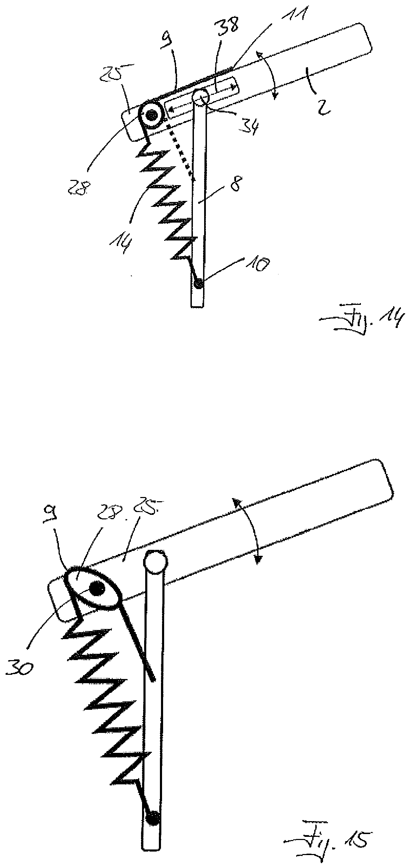

Figur 14 zeigt eine Ausgestaltung einer Vorrichtung gemäß einem weiteren Ausführungsbeispiel der vorliegenden Erfindung. Das Umlenkelement 28 ist am Kraftangriffshebel 25 positioniert, der Teil des Armstützelementes 2 ist und mit diesem drehfest verbunden ist. Das gesamte Armstützelement 2 ist entlang des Doppelpfeils 38 relativ zum Kraftübertragungselement 8 und der Schwenkachse 34 verschiebbar ausgebildet. Das erste Ende 11 des Übertragungselementes 9, welches wieder Teil des Aktuators 14 ist, ist am Armstützelement 2 festgelegt. Durch eine Verschiebung des Armstützelementes 2 entlang einer Richtung des Doppelpfeils 38 verändert sich insbesondere die Richtung, in der sich der eigentliche Aktuator 14 erstreckt. Diese verläuft vom Umlenkelement 28 zum zweiten Ende 10 des passiven Aktuators 14. Zudem verändert sich die Länge des Kraftangriffshebels 25 und damit die wirksame Hebellänge der vom Aktuator aufgebrachten Kraft.

In Figur 15 ist das Umlenkelement 28 am Kraftangriffshebel 25 positioniert und verfügt über eine ovale Außenkontur, entlang derer das Übertragungselement 9 als Teil des Aktuators geführt ist. Das Umlenkelement 28 ist um eine Drehachse 30 drehbar und in unterschiedlichen Orientierungen relativ zum Kraftangriffshebel 25 festlegbar. Dadurch lässt sich die Vorspannung des Aktuators 14, die Richtung, in die sich der Aktuator 14 erstreckt in Richtung auf sein zweites Ende 10 und die Länge des wirksamen Kraftangriffshebels 25 einstellen.

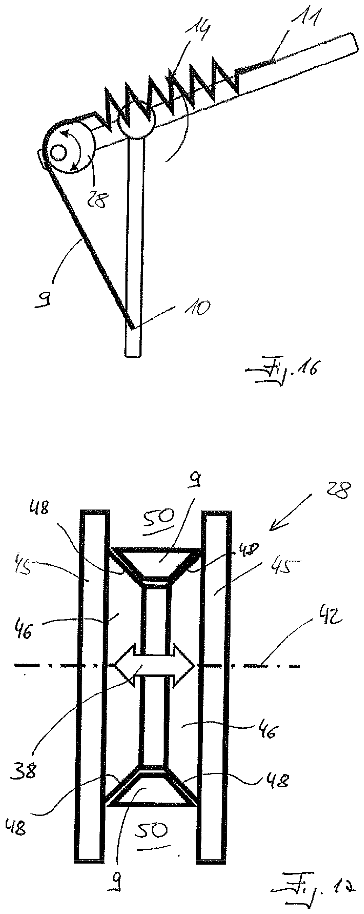

Figur 16 zeigt eine Ausgestaltung, bei der sich der eigentliche Aktuator 14, der beispielsweise ein Federelement oder ein elastisches Element sein kann, zwischen seinem ersten Ende 11 und dem Umlenkelement 28 befindet. Das Übertragungselement bildet nun das zweite Ende 10 des passiven Aktuators.

Figur 17 zeigt eine Ausgestaltung eines Umlenkelementes 28, das als Umlenkscheibe ausgebildet ist. Sie ist vorzugsweise rotationssymmetrisch und verfügt über eine Symmetrieachse 42, die in Figur 17 von links nach rechts verläuft.

Das Umlenkelement 28 verfügt über zwei Backen 45, die entlang des Doppelpfeils 38 aufeinander zu und voneinander weg bewegbar sind. An ihrer der jeweils anderen Barke 45 zugewandten Seite verfügen Sie über ein abgeschreckte Element 46 mit jeweils einer Schrägseite 48. Das Umlenkelement 28 ist folglich als Umlenkscheibe mit einer umlaufende Nut 50 im Umfang ausgebildet. In dieser Nut 50 verläuft im gezeigten Ausführungsbeispiel das Übertragungselement 9. Es hat einen an die Form der Nut 50 angepassten Querschnitt, der im gezeigten Ausführungsbeispiel trapezförmig ist. Werden nun die beiden Backen 45 voneinander wegbewegt vergrößert sich der Abstand zwischen den beiden Schrägelementen und die Nut 50 wird breiter. Durch die trapezförmige Ausgestaltung des Querschnittes des Übertragungselementes 9 rutscht dieses weiter Richtung Symmetrieachse 42, sodass sich der wirksame Umfang des Umlenkelementes 28 verkürzt. Dadurch lässt sich sowohl die Vorspannung des passiven Aktuators als auch die wirksame Hebellänge und die Richtung, in die sich der eigentliche Aktuator erstreckt, verändern.

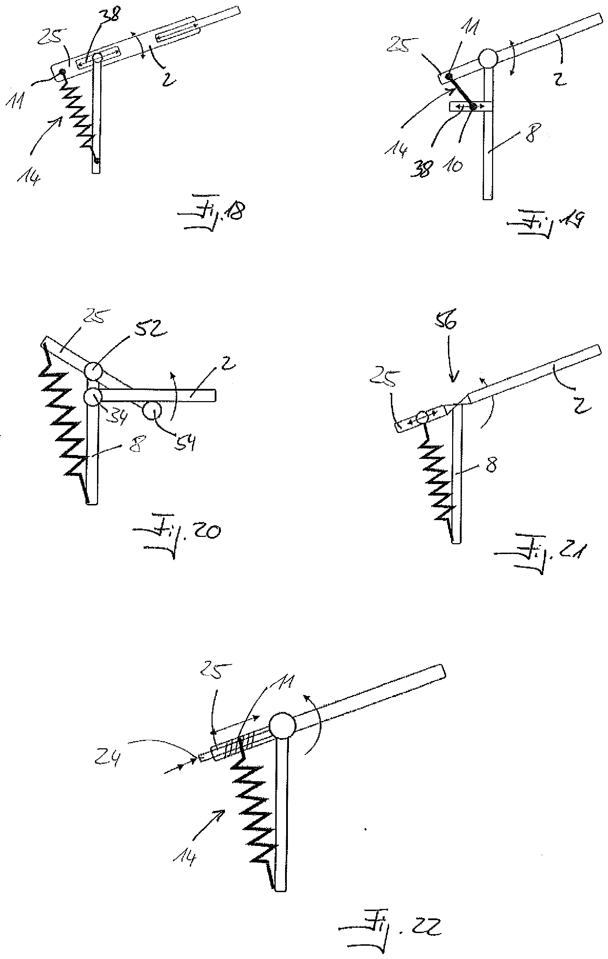

Die Vorrichtung gemäß Figur 18 verfügt über einen Aktuator 14, dessen erstes Ende 11 am Kraftangriffshebel 25 angeordnet ist, der mit dem Armstützelement 2 drehfest verbunden ist. Entlang des Doppelpfeils 38 lässt sich das Armstützelement 2 mit dem daran angeordneten Kraftangriffshebel 25 verschieben, wodurch die wirksame Hebellänge verändert wird. Da dadurch auch eine an dem Armstützelement 2 angeordnete Armschale verschoben würde, ist das Armstützelement längenverstellbar ausgebildet.

Bei der Vorrichtung gemäß Figur 19 ist der Aktuator 14 mit seinem ersten Ende 11 am Kraftangriffshebel 25 positioniert. Das zweite Ende 10 hingegen ist entlang des Doppelpfeils 38 verschiebbar an einem dafür vorgesehenen Bauteil positioniert.

Bei der Vorrichtung gemäß Figur 20 ist der Kraftangriffshebel 25 um eine Schwenkachse 52 schwenkbar am Kraftübertragungselement 8 positioniert, wobei die Schwenkachse 52 nicht mit der Schwenkachse 34 zusammenfällt. Über einen Vorsprung 54, der am Kraftangriffshebel 25 angeordnet ist und mit dem Armstützelement 2 zusammenwirkt, wird das Armstützelement 2 bewegt.

Die Vorrichtung gemäß Figur 21 verfügt als Besonderheit über eine Bewegungseinrichtung 56, durch die das Kraftübertragungselement 8, das Armstützelement 2 und/oder der Kraftangriffshebel 25 relativ zueinander bewegbar verbunden sind. Diese Bewegungseinrichtung 56 erlaubt eine Bewegung, liegt jedoch keine Schwenkachse fest, sodass die Bewegung freier ist und auf mechanische Belastungen besser reagieren kann.

Bei der Vorrichtung gemäß Figur 22 ist der Kraftangriffshebel 25 mit einem Außengewinde versehen, an dem das erste Ende 11 des Aktuators 14 befestigt ist. Mittels der Betätigungseinrichtung 24 lässt sich das Gewinde drehen, wobei der Aktuator 14 aufgewickelt oder abgewickelt wird. Dabei verschiebt sich auch der Krafteinleitungspunkt und die Vorspannung des Aktuators wird verändert.

### Bezugszeichenliste

- 2: Armstützelement
- 4: Gegenlagerelement
- 8: Kraftübertragungselement
- 9: Übertragungselement
- 10: zweites Ende
- 11: erstes Ende
- 14: passiver Aktuator
- 15: Gewindestange
- 16: Kulisse
- 20: Schieber
- 22: Scheibe
- 24: Betätigungseinrichtung
- 25: Kraftangriffshebel
- 26: Achse
- 28: Umlenkelement
- 29: Zugverbindung
- 30: Drehachse
- 32: Armschale
- 34: Schwenkachse
- 36: Stift
- 38: Doppelpfeil
- 42: Symmetrieachse
- 44: Krafteinleitungspunkt
- 45: Backe
- 46: abgeschrägtes Element
- 48: Schrägseite
- 50: Nut
- 52: Schwenkachse
- 54: Vorsprung
- 56: Bewegungseinrichtung

## Patentansprüche

1. Vorrichtung zum Unterstützen wenigstens eines Oberarms eines Benutzers, wobei die Vorrichtung
a. wenigstens ein Armstützelement (2) mit einer Armschale (32) zum Anlegen an den Oberarm,
b. wenigstens einen passiven Aktuator (14), der ein erstes Ende (11) und ein zweites Ende (10) aufweist und eingerichtet ist, eine Kraft auf das wenigstens eine Armstützelement (2) aufzubringen,
c. wenigstens ein Umlenkelement (28), an dem der wenigstens eine Aktuator (14) anliegt, und H
d. wenigstens ein Gegenlager für die aufzubringende Kraft aufweist,
**dadurch gekennzeichnet, dass**
die Art, Gestalt, Position und/oder Orientierung des wenigstens einen Umlenkelements (28) relativ zu dem Armstützelement (2) derart veränderbar ist, dass die von dem Aktuator (14) aufbringbare Kraft einstellbar ist.

2. Vorrichtung nach Anspruch 1, **dadurch gekennzeichnet, dass** eine erste Position, an der das erste Ende (11) des Aktuators (14) an einem Bauteil der Vorrichtung angeordnet ist und eine zweite Position, an der das zweite Ende (10) des Aktuators (14) an einem Bauteil der Vorrichtung angeordnet ist, unveränderbar sind.

3. Vorrichtung nach Anspruch 1 oder 2, **dadurch gekennzeichnet, dass** das wenigstens eine Umlenkelement (28) entlang einer vorbestimmten Bahn, vorzugsweise einer geraden Linie, besonders bevorzugt entlang eines Bauteils der Vorrichtung, bewegbar ist.

4. Vorrichtung nach Anspruch 3, **dadurch gekennzeichnet, dass** das wenigstens eine Umlenkelement (28) eine Kulisse aufweist, entlang derer ein Pin verschieblich ist, der an einem Bauteil der Vorrichtung angeordnet ist.

5. Vorrichtung nach Anspruch 4, **dadurch gekennzeichnet, dass** das wenigstens eine Umlenkelement (28) um den Pin drehbar und in verschiedenen Orientierungen relativ zu dem Pin befestigbar ist, so dass sich die Orientierung nicht ändert.

6. Vorrichtung nach einem der vorstehenden Ansprüche, **dadurch gekennzeichnet, dass** das Gegenlager ein Gegenlagerelement und ein Kraftübertragungselement aufweist, das eingerichtet ist, eine Gegenkraft auf das Gegenlagerelement zu übertragen, wobei das Armstützelement (2) um eine Schwenkachse (34) schwenkbar an dem Kraftübertragungselement (8) angeordnet ist.

7. Vorrichtung nach Anspruch 6, **dadurch gekennzeichnet, dass** das erste und das zweite Ende des Aktuators (14) an dem Kraftübertragungselement (8) und wenigstens ein Umlenkelement (28) an dem Armstützelement (2) angeordnet sind oder umgekehrt.

8. Vorrichtung nach Anspruch 6 oder 7, **dadurch gekennzeichnet, dass** ein Ende (10,11) des Aktuators (14) an der Schwenkachse (34) angeordnet ist.

## Claims

1. A device for supporting at least one upper arm of a user, wherein the device has
a. at least one arm support element (2) with an arm shell (32) for mounting on the upper arm,
b. at least one passive actuator (14), which has a first end (11) and a second end (10) and is configured to apply a force to the at least one arm support element (2),
c. at least one deflector element (28) against which the at least one actuator (14) rests, and
d. at least one counter bearing for the force to be applied,
**characterized in that**
the type, shape, position and/or orientation of the at least one deflector element (28) relative to the arm support element (2) can be changed in such a way that the force which can be applied by the actuator (14) can be adjusted.

2. The device according to claim 1, **characterized in that** a first position, at which the first end (11) of the actuator (14) is arranged on a component of the device, and a second position, at which the second end (10) of the actuator (14) is arranged on a component of the device, cannot be changed.

3. The device according to claim 1 or 2, **characterized in that** the at least one deflector element (28) can be moved along a predetermined track, preferably a straight line, especially preferably along a component of the device.

4. The device according to claim 3, **characterized in that** the at least one deflector element (28) comprises a slot, along which a pin can be displaced, said pin being arranged on a component of the device.

5. The device according to claim 4, **characterized in that** the at least one deflector element (28) can be rotated about the pin and fixed in various orientations relative to the pin, so that the orientation does not change.

6. The device according to one of the preceding claims, **characterized in that** the counter bearing comprises a counter bearing element and a force transmission element, which is configured to transmit a counter force to the counter bearing element, wherein the arm support element (2) is arranged on the force transmission element (8) such that it can be swiveled about a swivel axis (34).

7. The device according to claim 6, **characterized in that** the first and second end of the actuator (14) are arranged on the force transmission element (8) and at least one deflector element (28) on the arm support element (2) or vice-versa.

8. The device according to claim 6 or 7, **characterized in that** one end (10,11) of the actuator (14) is arranged on the swivel axis (34).

## Revendications

1. Dispositif destiné à soutenir au moins un bras d'un utilisateur, le dispositif comprenant
a. au moins un élément de soutien de bras (2) ayant une coque pour bras (32) destinée à être appliquée contre le bras,
b. au moins un actionneur passif (14) qui présente une première extrémité (11) et une deuxième extrémité (10) et qui est conçu pour exercer une force sur ledit au moins un élément de soutien de bras (2),
c. au moins un élément de renvoi (28) contre lequel s'appuie ledit au moins un actionneur (14), et
d. au moins un support antagoniste pour la force à exercer,
**caractérisé en ce que**
le type, la forme, la position et/ou l'orientation dudit au moins un élément de renvoi (28) par rapport à l'élément de soutien de bras (2) peut être modifié(e) de telle sorte que la force à exercer par l'actionneur (14) est réglable.

2. Dispositif selon la revendication 1,
**caractérisé en ce qu'**une première position, dans laquelle la première extrémité (11) de l'actionneur (14) est disposée sur un composant du dispositif, et une deuxième position, dans laquelle la deuxième extrémité (10) de l'actionneur (14) est disposée sur un composant du dispositif, sont invariables.

3. Dispositif selon la revendication 1 ou 2,
**caractérisé en ce que** ledit au moins un élément de renvoi (28) est mobile le long d'une trajectoire prédéterminée, de préférence le long d'une ligne droite, de manière particulièrement préférée le long d'un composant du dispositif.

4. Dispositif selon la revendication 3,
**caractérisé en ce que** ledit au moins un élément de renvoi (28) présente une coulisse le long de laquelle peut coulisser une broche qui est disposée sur un composant du dispositif.

5. Dispositif selon la revendication 4,
**caractérisé en ce que** ledit au moins un élément de renvoi (28) peut tourner autour de la broche et peut être fixé dans différentes orientations par rapport à la broche, de sorte que l'orientation ne change pas.

6. Dispositif selon l'une des revendications précédentes,
**caractérisé en ce que** le support antagoniste comprend un élément de support antagoniste et un élément de transmission de force conçu pour transmettre une force antagoniste à l'élément de support antagoniste, l'élément de soutien de bras (2) étant disposé sur l'élément de transmission de force (8) de manière à pivoter autour d'un axe de pivotement (34).

7. Dispositif selon la revendication 6,
**caractérisé en ce que** les première et deuxième extrémités de l'actionneur (14) sont disposées sur l'élément de transmission de force (8), et au moins un élément de renvoi (28) est disposé sur l'élément de soutien de bras (2), ou inversement.

8. Dispositif selon la revendication 6 ou 7,
**caractérisé en ce qu'**une extrémité (10, 11) de l'actionneur (14) est disposée sur l'axe de pivotement (34).
